# EUROPÄISCHE PATENTSCHRIFT

(11) **EP 2 502 027 B1**
(45) Veröffentlichungstag und Bekanntmachung des Hinweises auf die Patenterteilung: **20.11.2013**
(21) Anmeldenummer: 09805687.2
(22) Anmeldetag: 20.11.2009
(51) Int. Cl.: G01D 3/036

(54) **MESSEINRICHTUNG MIT KOMPENSATION VON STÖRQUELLEN**
MEASURING DEVICE HAVING COMPENSATION OF DISTURBANCE SOURCES
DISPOSITIF DE MESURE AVEC COMPENSATION DE SOURCES DE PARASITES

(43) Veröffentlichungstag der Anmeldung: 26.09.2012
(73) Patentinhaber: Siemens Aktiengesellschaft, 80333 München (DE)
(72) Erfinder: MÜLLER, Klaus-Dieter, 90425 Nürnberg (DE); KLOS, Hans-Henning, 90475 Nürnberg (DE); SCHEIBNER, Dirk, 90473 Nürnberg (DE)
(86) Internationale Anmeldenummer: PCT/EP2009/065520
(87) Internationale Veröffentlichungsnummer: WO 2011/060827

(56) Entgegenhaltungen:
- DE-A1- 10 334 204
- US-B1- 6 868 731

## Beschreibung

Die Erfindung betrifft eine Messeinrichtung mit einem ersten mikroelektromechanischen Sensor, der zur Erzeugung eines Nutzsignals in Abhängigkeit einer erfassten Messgröße dient.

Mikroelektromechanische Sensoren sind an sich bekannt. Sie eignen sich wegen ihrer geringen Baugröße beispielsweise zur Messung in Maschinen und Anlagen. Sobald dabei elektromagnetische Störungen auftreten, ergeben sich jedoch Schwierigkeiten. Auf Störungen in Form elektromagnetischer Wellen reagieren die meisten Sensorsysteme äußerst sensibel, indem die Nutzsignale deutlich verfälscht und völlig unbrauchbar werden. Ein Beispiel hierzu ist der Einfluss von Umrichtern in Antrieben, die mit den Harmonischen der PWM-Taktfrequenz extreme Störungen bei der Messung von Schwingungen zur Bestimmung von Unwuchten und Schadenszuständen, z.B. in Lagern verursachen.

Die WO 2008/149298 A1 und DE 103 34 204 A1 offenbaren ein Verfahren zur Kompensation eines variablen Parameters mit Hilfe eines Referenzwandlers. US 6,868,731 B1 offenbart einer MEMS Sensor mit Temperaturkompensation.

Der Erfindung liegt die Aufgabe zugrunde, eine Messeinrichtung der oben genannten Art vorzuschlagen, die eine Eliminierung von Störsignalen ermöglicht.

Die Aufgabe wird mit den Merkmalen nach Anspruch 1 gelöst.

Ein Ausführungsbeispiel der Erfindung wird im Folgenden anhand einer Zeichnung näher erläutert. Es zeigen:
- FIG 1: ein Signalverarbeitungsplan einer erfinderischen Messeinrichtung mit einem mikroelektromechanischen Sensor,
- FIG 2: eine erste Ausführungsform einer erfinderischen Messeinrichtung mit einem mikroelektromechanischen Sensor,
- FIG 3: eine zweite Ausführungsform einer erfinderischen Messeinrichtung mit einem mikroelektromechanischen Sensor und
- FIG 4: eine dritte Ausführungsform einer erfinderischen Messeinrichtung mit einem mikroelektromechanischen Sensor.

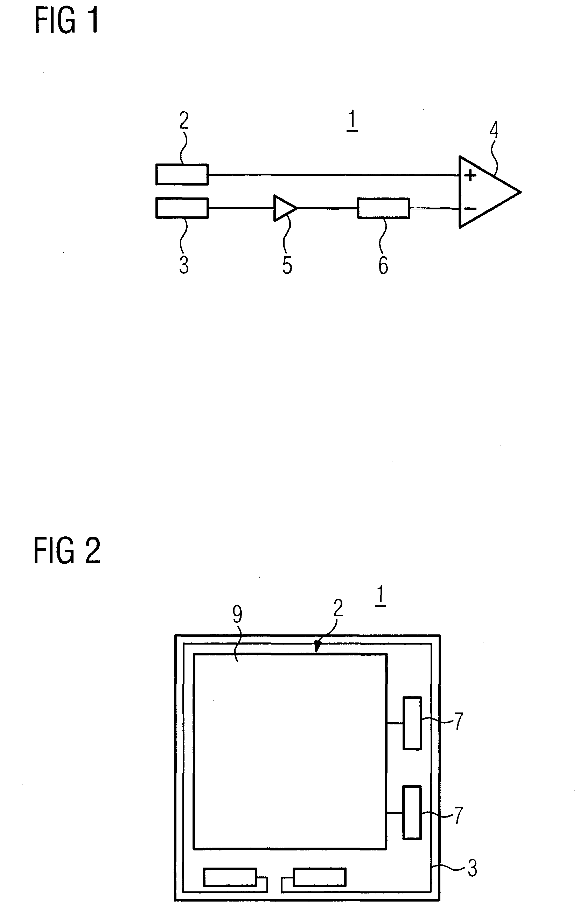

In FIG 1 ist ein Signalverarbeitungsplan einer erfinderischen Messeinrichtung 1 dargestellt. Die Messeinrichtung 1 weist einen mikroelektromechanischen Sensor 2, der zur Erzeugung eines Nutzsignals in Abhängigkeit einer erfassten Messgröße dient, eine Störgrößen-Messeinheit 3 und einen Subtrahierer 4 auf. Der Subtrahierer 4 ist sowohl mit dem Ausgang des mikroelektromechanischen Sensors 2 als auch mit dem Ausgang der Störgrößen-Messeinheit 3 verbunden. Dabei sind in der Verbindung zwischen der Störgrößen-Messeinheit 3 und dem Subtrahierer 4 ein Verstärker 5 und wahlweise ein Phasenverstellglied 6 zwischengeschaltet. Die Messeinrichtung 1 kompensiert das dem Nutzsignal des mikroelektromechanischen Sensors 2 überlagerte Störsignal mithilfe der Störgrößen-Messeinheit 3. Hierzu wird das von der Störgrößen-Messeinheit 3 aufgenommene Störsignal so eingestellt, dass bei fehlendem Nutzsignal sowohl der mikroelektromechanische Sensor 2 als auch die Störgrößen-Messeinheit 3 die gleichen Störsignale amplituden- und phasengleich zeigen. Bei vorhandenem Nutzsignal subtrahiert der Subtrahierer 4 das Störsignal der Störgrößen-Messeinheit 3 von dem Ausgangssignal des mikroelektromechanischen Sensors 2, so dass im Wesentlichen nur noch das Nutzsignal übrig bleibt. Aufgrund der Wellenausbreitung ist es erforderlich, dass sowohl der mikroelektromechanische Sensor 2 als auch die Störgrößen-Messeinheit 3 räumlich möglichst nahe beieinander sind.

Die Störgrößen-Messeinheit 3 kann beispielsweise als Referenzsensor ausgeführt sein, der am gleichen Platz wie der mikroelektromechanische Sensor 2 als Nutzsensor, z.B. in demselben Sensorgehäuse misst. Dadurch ist ein weitgehend störungsfreier Messbetrieb der Nutzgrößen möglich, insbesondere auch dann, wenn die Frequenzen der Störungssignale unbekannt sind, und insbesondere auch dann, wenn die Frequenzen der Störquellen nicht verschiebbar sind oder nicht verschoben werden.

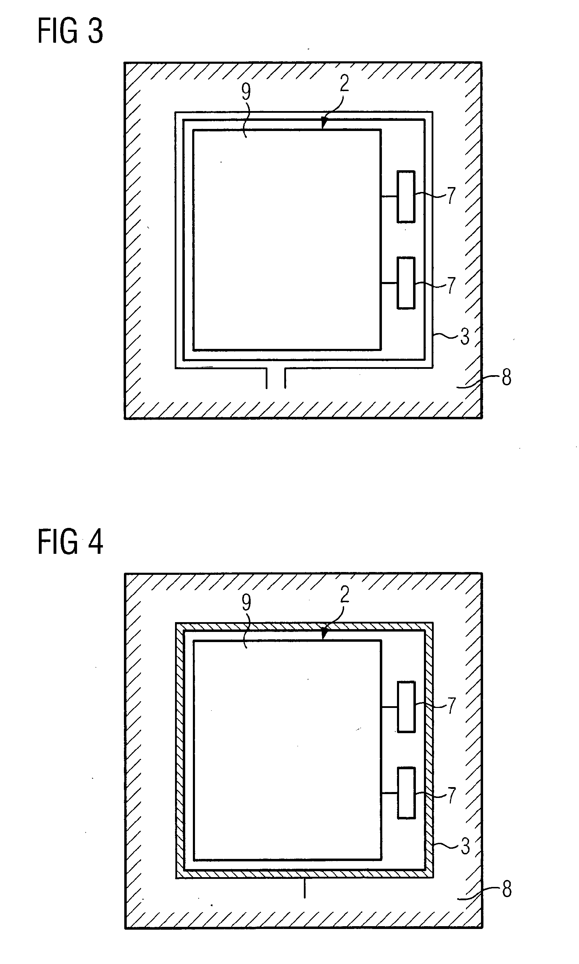

In den FIG 2, 3 und 4 werden unterschiedliche Ausführungsformen der erfinderischen Messeinrichtung 1 gezeigt. Der mikroelektromechanische Sensor 2 umfasst ein Sensorelement 9 und zwei mit diesem verbundene Bondpads 7, die als Ein- und Ausgang dienen. Bei der Ausführungsform der erfinderischen Messeinrichtung 1 gemäß FIG 2 und 3 ist die Störgrößen-Messeinheit 3 als Leiterschleife ausgeführt. Die Leiterschleife ist gemäß FIG 2 in der Sensorstruktur des Sensors 2 integriert.

Bei der Ausführungsform gemäß FIG 3 ist die Leiterschleife auf ein Substrat 8 aufgebracht, das den mikroelektromechanischen Sensor 2 trägt.

Gemäß FIG 4 wird zur Detektion eines elektrostatischen Störfelds als Störgrößen-Messeinheit 3 in das Substrat 8, das den mikroelektromechanischen Sensor 2 trägt, eine Kapazität eingebracht.

Die erfindungsgemäße Messeinrichtung 1 kann beispielsweise zur Eliminierung der Störungen von Umrichtern in Antrieben eingesetzt werden, bei denen die Lager mit mikroelektromechanischen Sensoren überwacht werden. Nach herkömmlichem Vorgehen wird hierzu ein Schwingungssensor am Lager angebracht, wobei im Falle des Umrichterbetriebs ein markantes Störungssignal dem Nutzsignal überlagert ist.

## Patentansprüche

1. Messeinrichtung (1) mit einem mikroelektromechanischen Sensor (2), der zur Erzeugung eines Nutzsignals in Abhängigkeit einer erfassten Messgröße dient, mit folgenden Merkmalen:
a) mit einer Störgrößen-Messeinheit (3),
b) mit einem Subtrahierer(4), der sowohl mit einem Ausgang des mikroelektromechanischen Sensors (2) als auch mit einem Ausgang der Störgrößen-Messeinheit (3) elektrisch verbunden ist, **dadurch gekennzeichnet dass**
c) in der Verbindung zwischen der Störgrößen-Messeinheit (3) und dem Subtrahierer (4) ein Verstärker (5) zwischengeschaltet ist, wobei
d) die Störgrößen-Messeinheit (3) als eine den mikroelektromechanischen Sensor (2) umgebende Leiterschleife oder eine Kapazität ausführt ist, wobei
e) ein Substrat (8) den mikroelektromechanischen Sensor (2) trägt und wobei
f) die Leiterschleife auf das Substrat (8) aufgebracht ist oder die Kapazität zur Detektierung eines elektrostatischen Störfeldes im Substrat (8) eingebracht ist.

## Claims

1. Measuring facility (1) having a microelectromechanical sensor (2), which is used to generate a useful signal as a function of an acquired measured variable, having the following features:
a) having a disturbance variable measuring unit (3),
b) having a subtractor (4) which is electrically connected to both an output of the microelectromechanical sensor (2) and also to an output of the disturbance variable measuring unit (3), **characterised in that**
c) an amplifier (5) is interconnected in the connection between the disturbance variable measuring unit (3) and the subtractor (4), wherein
d) the disturbance variable measuring unit (3) is embodied as a conductor loop or a capacitor surrounding the microelectromechanical sensor (2), wherein
e) a substrate (8) supports the microelectromechanical sensor (2) and wherein
f) the conductor loop is applied to the substrate (8) or the capacitor is introduced for detecting an electrostatic disturbance field in the substrate (8).

## Revendications

1. Dispositif ( 1 ) de mesure comprenant un capteur ( 2 ) micro-électromécanique qui sert à la production d'un signal utile en fonction d'un grandeur de mesure relevée, comprenant les caractéristiques suivantes :
a) ayant une unité ( 3 ) de mesure de grandeurs parasites ( 3 ),
b) ayant un soustracteur ( 4 ), qui est relié électriquement à la fois à une sortie du capteur ( 2 ) micro-électromécanique et à une sortie de l'unité ( 3 ) de mesure de grandeurs parasites, **caractérisé en ce que**
c) il est monté intermédiairement un amplificateur ( 5 ) dans la liaison entre l'unité ( 3 ) de mesure de grandeurs parasites et le soustracteur ( 4 ), dans lequel
d) l'unité ( 3 ) de mesure de grandeurs parasites est réalisée sous la forme d'une boucle conductrice ou d'une capacité entourant le capteur ( 2 ) micro-électromécanique, dans lequel
e) un substrat ( 8 ) porte le capteur ( 2 ) micro-électromécanique et dans lequel
f) la boucle conductrice est déposée sur le substrat ( 8 ) ou la capacité est introduite dans le substrat ( 8 ) pour la détection d'un champ électrostatique parasite.
